# EUROPÄISCHE PATENTSCHRIFT

(11) **EP 4 028 291 B1**
(45) Veröffentlichungstag und Bekanntmachung des Hinweises auf die Patenterteilung: **23.08.2023**
(21) Anmeldenummer: 20771482.5
(22) Anmeldetag: 03.09.2020
(51) Int. Cl.: B60R 22/34, B60R 22/343

(54) **GURTAUFROLLER MIT EINER ELEKTRISCH BETÄTIGBAREN BLOCKIEREINRICHTUNG**
BELT RETRACTOR HAVING AN ELECTRICALLY ACTUATABLE LOCKING DEVICE
RÉTRACTEUR DE CEINTURE AVEC DISPOSITIF DE VERROUILLAGE ACTIONNABLE ÉLECTRIQUEMENT

(30) Priorität: 12.09.2019 DE 102019213915
(43) Veröffentlichungstag der Anmeldung: 20.07.2022
(73) Patentinhaber: Autoliv Development AB, 447 83 Vårgårda (SE)
(72) Erfinder: GLAESSER, Antto-Christian, 25474 Hasloh (DE); KUNZLER, Florian, 25337 Elmshorn (DE); RINGS, Philip, 22846 Norderstedt (DE)
(74) Vertreter: Müller Verweyen
(86) Internationale Anmeldenummer: PCT/EP2020/074519
(87) Internationale Veröffentlichungsnummer: WO 2021/047982

(56) Entgegenhaltungen:
- GB-A- 2 398 824

## Beschreibung

Die vorliegende Erfindung betrifft einen Gurtaufroller mit einer elektrisch betätigbaren Blockiereinrichtung mit den Merkmalen des Oberbegriffs von Anspruch 1.

Eine gattungsgemäße elektrisch betätigbare Blockiereinrichtung ist z.B. aus der GB 2 398 824 A bekannt.

Derartige Blockiereinrichtungen dienen dazu, eine außenverzahnte Steuerscheibe, welche drehbar an einer Gurtwelle des Gurtaufrollers gelagert ist, durch Eingriff eines Blockierhebels gegenüber der Gurtwelle anzuhalten und dadurch eine Blockierklinke zu einer Einsteuerbewegung in eine fahrzeugfeste Verzahnung zu zwingen, wodurch wiederum die Gurtwelle in Auszugsrichtung blockiert wird.

Bei herkömmlichen mechanischen Blockiereinrichtungen ist eine träge Masse auf einer Aufstandsfläche gelagert, welche bei einem Überschreiten einer vorbestimmten Fahrzeugverzögerung ausgelenkt wird und dadurch den Blockierhebel auslenkt und zu einem Eingriff in die Verzahnung der Steuerscheibe zwingt. Derartige mechanische Blockiereinrichtungen werden auch als fahrzeugsensitive Sensoreinrichtungen bezeichnet. Ein Problem dieser mechanischen Blockiereinrichtungen ist, dass die träge Masse immer in einer definierten Ausrichtung auf der Aufstandsfläche zu der Fahrzeuglängsachse und der Fahrzeugquerachse unabhängig von der Einbaugeometrie des Gurtaufrollers ausgerichtet sein muss, damit die Gurtwelle nicht unbeabsichtigt blockiert wird. Damit muss der Gurtaufroller fahrzeugindividuell ausgelegt werden, indem die Ausrichtung der Aufstandsfläche und der darauf anliegenden Masse zu dem Gurtaufroller individuell so ausgelegt wird, dass sie unter Berücksichtigung der Einbaugeometrie des Gurtaufrollers im Fahrzeug der vorgegebenen Ausrichtung entspricht. Ferner besteht bei in den Vordersitzen integrierten Gurtaufrollern wie z.B. bei Cabriolets das Problem, dass die träge Masse bei einer Verstellung des Neigungswinkels der Rückenlehne bzw. beim Vorwärtsklappen der Rückenlehnen zu einem Einstieg auf die hinteren Sitze unbeabsichtigt auf der Aufstandsfläche ausgelenkt und dadurch der Blockierhebel unbeabsichtigt zu einer Einsteuerbewegung in die Außenverzahnung der Steuerscheibe gezwungen wird. Damit ist der Gurtaufroller in Auszugsrichtung blockiert und die Rückenlehne kann nicht weiter verschwenkt werden bzw. der Insasse kann sich nicht anschnallen. Um das zu vermeiden, müssen zusätzliche Abschaltmechaniken bzw. Ausgleichsmechaniken vorgesehen werden, die ihrerseits aber nur in diesen Fällen wirken dürfen, damit die Rückhaltung des Insassen im Unfall in jedem Fall gegeben ist. Durch diese zu lösenden Aufgaben wird eine solche mechanische Blockiereinrichtung mechanisch sehr komplex.

Bei einer elektrisch betätigbaren Blockiereinrichtung, wie sie z.B. aus der GB 2 398 824 A bekannt ist, wird die Bewegung des Blockierhebels hingegen elektrisch gesteuert, wodurch die bisher erforderliche träge Masse entfällt. Der Gurtaufroller kann dadurch unverändert in verschiedenen Einbaulagen im Fahrzeug und auch in Rückenlehnen montiert werden. Ferner kann die Blockierung der Gurtwelle durch ein elektrisches Signal ausgehend von einer Steuereinrichtung gesteuert werden. Das Signal kann dabei von einer Steuereinrichtung erzeugt werden, welche das Signal auch in Abhängigkeit von anderen Sensoreinrichtungen oder Steuerungssystemen erzeugen kann. So ist es z.B. denkbar, die Gurtwelle automatisch bei einer Aktivierung eines fahrdynamischen Assistenzsystems zu blockieren, welches z.B. in Abhängigkeit eines Signals einer optischen Sensoreinrichtung angesteuert wird. Damit wird auch die elektrische Blockiereinrichtung direkt oder indirekt in Abhängigkeit von dem Signal der optischen Sensoreinrichtung angesteuert.

Eine von der Anmelderin in ihren Produkten verwendete elektrisch betätigbare Blockiereinrichtung 100, welche der Ausführungsform der GB 2 398 824 A entspricht, ist in den Figuren 3 und 5 gezeigt. Die elektrisch betätigbare Blockiereinrichtung 100 umfasst als Grundelemente ein Gehäuse 1 mit einem L-förmigen Grundaufbau mit einer Grundplatte 15 und einem ersten hochstehenden Schenkel 16, einen an dem ersten hochstehenden Schenkel 16 des Gehäuses 1 schwenkbar gelagerten Blockierhebel 2, einen Elektromagneten 3 und eine Feder 4, welche mit einem Ende an dem Gehäuse 1 gehalten ist und mit dem anderen Ende mit einem von dem ersten hochstehenden Schenkel 16 nach außen vorstehenden Ende des Blockierhebels 2 verbunden ist. Die Feder 4 ist als Zugfeder so ausgelegt, dass sie den Blockierhebel 2 in eine Stellung vorspannt, in welcher dieser in eine Außenverzahnung einer Steuerscheibe 21 eingreift und dadurch die Steuerscheibe 21 gegenüber der Gurtwelle zurückhält. Damit wird die Blockierklinke bei einer Drehung der Gurtwelle in Auszugsrichtung automatisch zu einer Einsteuerbewegung in eine fahrzeugfeste Verzahnung gezwungen, und die Gurtwelle ist nachfolgend gegen einen weiteren Gurtbandauszug blockiert. Der Blockierhebel 2 umfasst ein Konturteil 24 und eine Stahlplatte 5, wobei die Stahlplatte 5 dem Elektromagneten 3 zugewandt ist, so dass der Blockierhebel 2 bei einer Bestromung des Elektromagneten 3 von diesem angezogen und damit aus der Außenverzahnung der Steuerscheibe 21 herausgezogen wird. Damit ist die Gurtwelle nachfolgend in Auszugs- und Einzugsrichtung frei drehbar. Der Vorteil dieser Lösung ist darin zu sehen, dass die Gurtwelle auch bei einem Stromausfall oder einem Defekt des Elektromagneten 3 in Auszugsrichtung blockiert ist, und der Insasse wird auch in diesem Fall sicher zurückgehalten.

Der Elektromagnet 3 umfasst ein Grundbauteil 6 mit einem säulenförmigen Mittenabschnitt 7 und zwei Radialflansche 8, von denen jeweils einer an einem der Enden des Mittenabschnittes 7 radial nach außen vorsteht. Der Elektromagnet 3 ist mit dem Grundbauteil 6 auf der Grundplatte 15 des Gehäuses 1 gehalten. Das Grundbauteil 6 weist einen rohrförmigen Durchgangsabschnitt 14 in dem Mittenabschnitt 7 und einen ringförmigen Zwischenraum 9 radial außen an dem Mittenabschnitt 7 auf, wobei der ringförmige Zwischenraum 9 zu den Enden das Mittenabschnittes 7 hin durch die Radialflansche 8 begrenzt ist. Ferner umfasst der Elektromagnet 3 eine Spule 10 mit einer Vielzahl von Windungen, welche in dem ringförmigen Zwischenraum 9 angeordnet ist und über in dem Grundbauteil 6 vorgesehene Leitungen 11 mit einer externen Steuereinrichtung elektrisch kontaktiert ist. Außerdem umfasst der Elektromagnet 3 einen ersten Eisenkern 12, der in dem rohrförmigen Durchgangsabschnitt 14 des Grundbauteils 6 angeordnet und mit einem freien Ende der Stahlplatte 5 des Blockierhebels 2 zugewandt ist.

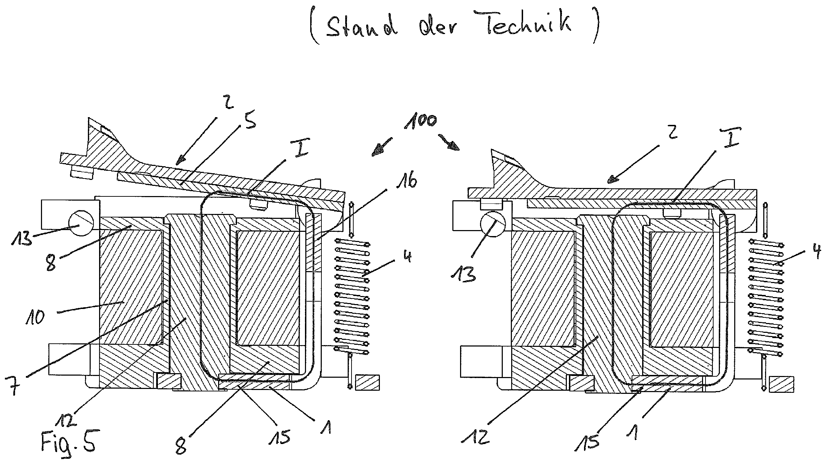

Bei einer Bestromung der Spule 10 wird der Blockierhebel 2 angezogen, indem er einen ersten magnetischen Kreis I, definiert durch den ersten hochstehenden Schenkel 16 des Gehäuses 1, den ersten Eisenkern 12 und die Abschnitte des Blockierhebels 2 und der Grundplatte 15 zwischen dem ersten Eisenkern 12 und dem ersten hochstehenden Schenkel 16 schließt, wie in der rechten Darstellung der Figur 5 zu erkennen ist.

Aufgabe der Erfindung ist es, einen Gurtaufroller mit einer hinsichtlich der Blockierbewegung und der Kraftverhältnisse verbesserten elektrisch betätigbaren Blockiereinrichtung bereitzustellen.

Zur Lösung der Aufgabe wird ein Gurtaufroller mit den Merkmalen von Anspruch 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass das Dämpfungselement durch wenigstens einen an dem Blockierhebel angeordneten, elastisch verformbaren Haken gebildet ist. Das Dämpfungselement ist damit direkt an dem Blockierhebel angeordnet, und dämpft dadurch die Bewegung des Blockierhebels unmittelbar, sobald dieser mit dem Haken an dem Gehäuse zur Anlage gelangt. Der Haken selbst ist aufgrund seiner Formgebung, Bemessung und seiner Werkstoffwahl in sich elastisch und kann sich dadurch in sich selbst verformen, sobald er an einer Gegenfläche des Gehäuses zur Anlage gelangt.

Dabei kann der Haken bevorzugt durch einen an den Blockierhebel angespritzten Kunststoffhaken gebildet sein, wodurch die vorgesehene Dämpfung des Blockierhebels besonders kostengünstig verwirklicht werden kann.

Weiter wird vorgeschlagen, dass an dem Gehäuse wenigstens eine Ausnehmung vorgesehen ist, in welche der Haken in wenigstens einer Stellung während seiner Bewegung eintaucht. Durch die vorgesehene Ausnehmung kann der Blockierhebel die Bewegung vollständig ausführen, ohne dass sie von den Haken eingeschränkt wird. Außerdem können die Haken in der Ausnehmung eine seitliche Führung für den Blockierhebel bilden.

Weiter wird vorgeschlagen, dass wenigstens zwei Haken identischer Formgebung vorgesehen sind, welche parallel zueinander ausgerichtet sind. Durch das Vorsehen von zwei parallel ausgerichteten Haken wird der Blockierhebel durch zwei beabstandete, elastische Auflagepunkte gedämpft, wobei die Dämpfung an den beiden Auflagepunkten in der Größe und Ausrichtung identisch ist.

Weiter wird vorgeschlagen, dass der Blockierhebel durch eine verschwenkbare Platte gebildet ist, an welcher eine elastische, vorstehende, gekröpfte Blockierspitze vorgesehen ist. Die elastische, vorstehende, gekröpfte Blockierspitze ist selbst aufgrund ihrer Eigenschaften und Formgebung elastisch an der Platte angeordnet, so dass sie selbst beim Eingriff in die Verzahnung der Steuerscheibe geringfügige gedämpfte Bewegungen ausführen kann. Dadurch wird die Blockierbewegung des Gurtaufrollers weiter gedämpft.

Weiter wird vorgeschlagen, dass an der dem ersten hochstehenden Schenkel gegenüberliegenden Randseite der Grundplatte ein zweiter hochstehender Schenkel vorgesehen ist, und in der Durchgangsöffnung ein zweiter Eisenkern angeordnet ist, und die Bewegung des Blockierhebels bei einer Aktivierung des Elektromagneten zusätzlich durch einen zweiten Magnetkreis, gebildet durch den zweiten Eisenkern, den zweiten hochstehenden Schenkel und die Abschnitte des Blockierhebels und der Grundplatte zwischen dem zweiten Schenkel und dem zweiten Eisenkern, erzwungen wird.

Der Vorteil der Lösung ist darin zu sehen, dass die von dem Elektromagneten aufgebrachte Haltekraft mit einfachen Mitteln erhöht werden kann, ohne dass dadurch die lokale maximale Belastung oder der Bauraumbedarf der beteiligten Bauteile erhöht wird. Dadurch kann im Umkehrschluss eine stärkere Feder vorgesehen werden, welche wiederum eine schnellere Bewegung des Blockierhebels bei der Deaktivierung des Elektromagneten ermöglicht. Dabei werden insbesondere Abschnitte der Grundplatte und des Blockierhebels, nämlich die Abschnitte zwischen dem zweiten Eisenkern und dem zweiten Schenkel, zur Aufbringung der Betätigungskräfte genutzt, welche vorher ungenutzt gewesen sind. Dies wird insbesondere durch das Vorsehen des zweiten Schenkels und des zweiten Eisenkerns ermöglicht. Es wird praktisch ein zweiter Magnetkreis, welcher bei der Verwendung eines bevorzugt identischen zweiten Eisenkerns und eines identischen zweiten Schenkels ungefähr gleiche Haltekräfte wie der bereits vorhandene erste Magnetkreis erzeugt. Es sind praktisch zwei parallel wirkende identische Magnetkreise vorhanden.

Weiter wird vorgeschlagen, dass der erste und der zweite Eisenkern in der Grundplatte des Gehäuses verstemmt sind, und dass der erste und/oder zweite hochstehende Schenkel einstückig mit der Grundplatte ausgebildet ist. Beide Lösungen ermöglichen eine kostengünstige Fertigung, wobei die Verbindung über das Verstemmen lediglich die Auslegung einer Presspassung erfordert.

Ferner kann die Grundplatte bevorzugt einen Endabschnitt aufweisen, welcher auf der Seite des ersten Schenkels angeordnet ist, die von dem zweiten Schenkel abgewandt ist, und die Feder kann mit einem Ende mit dem Endabschnitt der Grundplatte und mit dem anderen Ende mit einem über den ersten hochstehenden Schenkel hinausstehenden Ende des Blockierhebels verbunden sein. Durch die vorgeschlagene Lösung bildet der erste hochstehende Schenkel das Schwenklager, und der zweite hochstehende Schenkel bildet ein Auflager für den Blockierhebel, wenn er sich nicht in der Eingriffsstellung der Verzahnung der Steuerscheibe also in der Freigabestellung der Steuerscheibe befindet.

Weiter wird vorgeschlagen, dass der Blockierhebel um eine in dem ersten hochstehenden Schenkel angeordnete Drehachse schwenkbar gelagert ist. Dadurch können die in der Lagerung bzw. in dem Blockierhebel und in dem Schenkel wirkenden Momente reduziert werden.

Weiter kann die Spule bevorzugt elektrische Kontaktstellen aufweisen, welche an den Spulenkörper angespritzt sind. Die angespritzten Kontaktstellen ermöglichen einen vereinfachten elektrischen Anschluss des Elektromagneten mit einer externen Spannungsquelle bzw. einer externen Steuereinheit.

Die Erfindung wird im Folgenden anhand bevorzugter Ausführungsformen unter Bezugnahme auf die beigefügten Figuren erläutert. Dabei zeigt
- Fig. 1: einen erfindungsgemäßen Gurtaufroller mit einer blockierten Steuerscheibe, und
- Fig. 2: einen erfindungsgemäßen Gurtaufroller mit einer freigegebenen Steuerscheibe, und
- Fig. 3: eine elektrisch betätigbare Blockiereinrichtung nach dem Stand der Technik in Explosionsdarstellung, und
- Fig. 4: eine erfindungsgemäß weiterentwickelte elektrisch betätigbare Blockiereinrichtung in Explosionsdarstellung, und
- Fig. 5: eine elektrisch betätigbare Blockiereinrichtung nach dem Stand der Technik in Schnittdarstellung mit angezogenem und ausgelenktem Blockierhebel, und
- Fig. 6: eine erfindungsgemäß weiterentwickelte elektrisch betätigbare Blockiereinrichtung in Schnittdarstellung mit angezogenem und ausgelenktem Blockierhebel, und

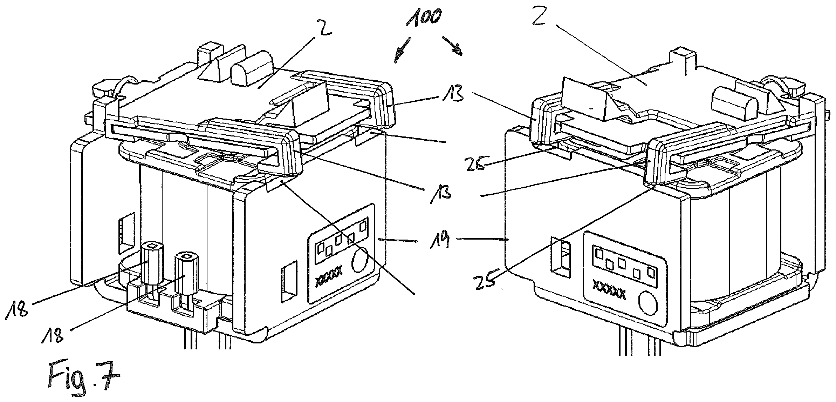

- Fig. 7: eine erfindungsgemäß weiterentwickelte elektrisch betätigbare Blockiereinrichtung in zwei verschiedenen Schrägansichten.

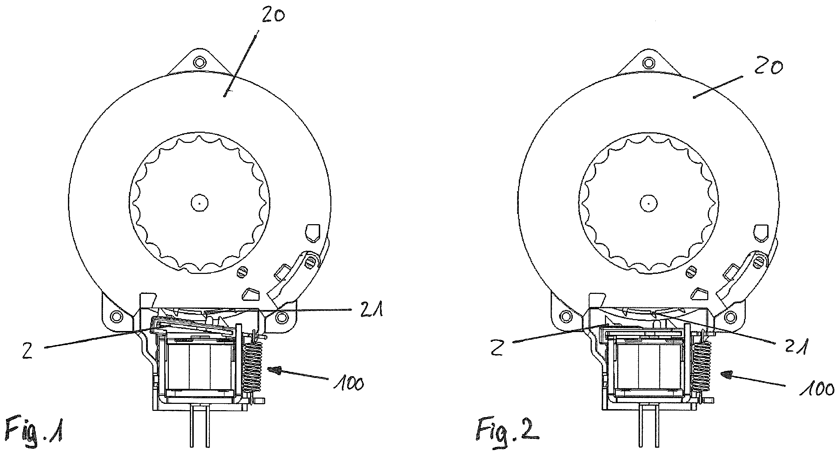

In den Figuren 1 und 2 ist jeweils ein Gurtaufroller mit einem Gehäuse 20 und einer von dem Gehäuse 20 abgedeckten Steuerscheibe 21 zu erkennen. Die Steuerscheibe 21 ist in bekannter Weise drehbar an einer nicht dargestellten Gurtwelle gelagert und mittels einer Feder in Aufwickelrichtung gegenüber dieser federvorgespannt. Ferner ist an dem Gurtaufroller eine elektrisch betätigbare Blockiereinrichtung 100 mit einem Blockierhebel 2 vorgesehen, welcher durch einen in der linken Darstellung zu erkennenden Eingriff in die Verzahnung der Steuerscheibe 21 bei einer weiteren Auszugsbewegung der Gurtwelle eine an der Gurtwelle gelagerte Blockierklinke zu einer Einsteuerbewegung in eine gehäusefeste Verzahnung zwingt, wodurch die Gurtwelle wiederum gegenüber einer weiteren Auszugsbewegung blockiert ist.

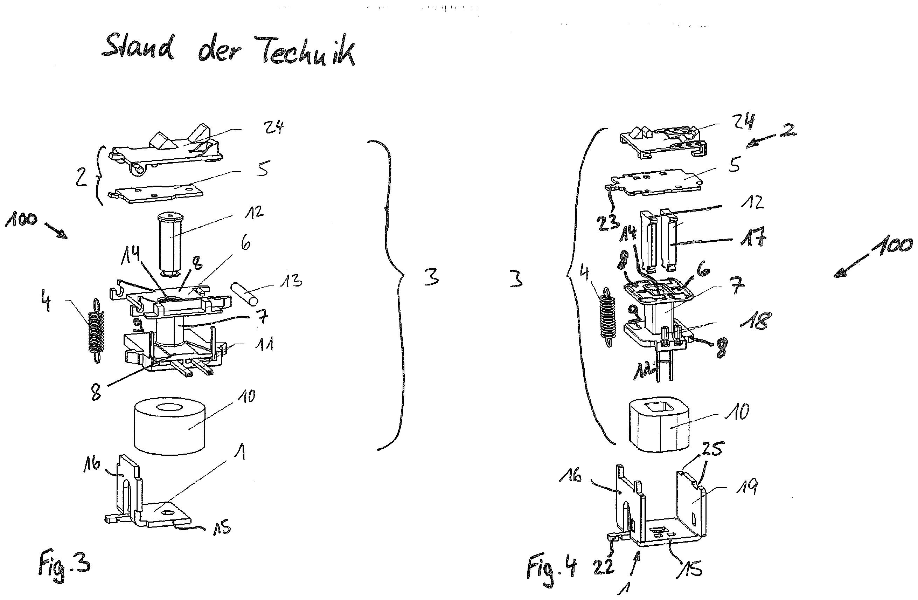

In der Figur 4 ist die erfindungsgemäß weiterentwickelte elektrisch betätigbare Blockiereinrichtung 100 zu erkennen, welche ein Gehäuse 1 und einen Elektromagneten 3 umfasst. Das Gehäuse 1 umfasst eine Grundplatte 15 und einen an einer Seite der Grundplatte 15 hochstehenden ersten Schenkel 16. Ferner umfasst das Gehäuse 1 einen zweiten hochstehenden Schenkel 19, welcher das Gehäuse 1 unter Bildung eines Zwischenraumes zu dem ersten hochstehenden Schenkel 16 zu einem U-förmigen Profil ergänzt. Sowohl der erste als auch der zweite hochstehende Schenkel 16, 19 können einstückig mit der Grundplatte 15 ausgebildet oder alternativ auch mit der Grundplatte 15 verstemmt sein.

Ferner ist ein Grundbauteil 6 mit einem Mittenabschnitt 7 und zwei Radialflanschen 8 vorgesehen, wobei zwischen den Radialflanschen 8 ein Zwischenraum 9 vorgesehen ist, in dem eine Spule 10 angeordnet ist. Das Grundbauteil 6 umfasst zwei elektrische Leitungen 11, welche über Kontakte 18 mit der Spule 10 verbunden sind. In einer Durchgangsöffnung 14 des Grundbauteils 6 sind zwei Eisenkerne 12 und 17 vorgesehen, welche in korrespondierenden Öffnungen der Grundplatte 15 des Gehäuses 1 verstemmt sind.

An der Oberseite der Blockiereinrichtung 100 ist der Blockierhebel 2 angeordnet, der durch eine Stahlplatte 5 und ein Konturteil 24 gebildet ist. Das Konturteil 24 kann an die Stahlplatte 5 anceclipst oder auch angespritzt sein und bildet mit dieser als Verbundbauteil den Blockierhebel 2.

Die Grundplatte 15 weist einen Endabschnitt 22 auf, der nach außen über den ersten hochstehenden Schenkel 16 hinaussteht. Die Stahlplatte 5 des Blockierhebels 2 weist ebenfalls ein über den ersten Schenkel 16 hinausstehendes Ende 23 auf. Das Ende 23 und der Endabschnitt 22 dienen der Befestigung einer Zugfeder 4.

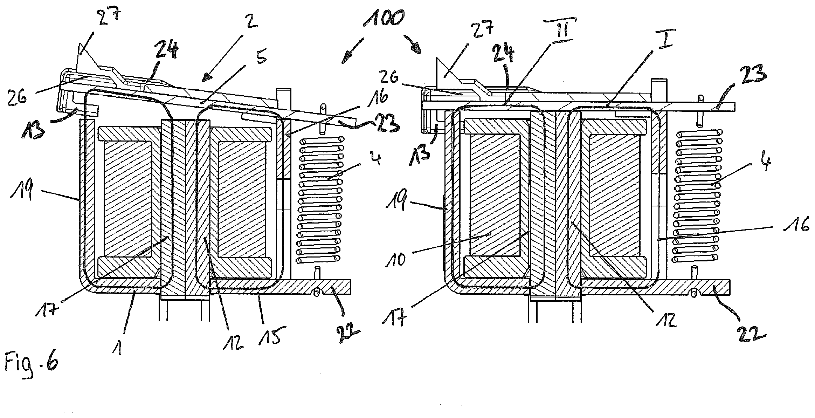

Der Blockierhebel 2 ist mit der Stahlplatte 5 an dem hochstehenden ersten Schenkel 16 schwenkbar gelagert, so dass die Feder 4 den Blockierhebel 2 bei einem deaktivierten Elektromagneten 3 in eine in der linken Darstellung der Fig. 6 zu erkennende ausgeschwenkte Blockierstellung zieht. Bei einer Aktivierung des Elektromagneten 3 wird der Blockierhebel 2 in die in der rechten Darstellung der Figur 6 gezeigte Stellung an die Eisenkerne 12 und 17 angezogen, und es wird neben dem ersten Magnetkreis I zusätzlich ein zweiter Magnetkreis II geschlossen.

Der Vorteil der vorgeschlagenen Lösung liegt erkennbar darin, dass durch den zweiten Schenkel 19 und den zweiten Eisenkern 17 ein zweiter Magnetkreis II geschaffen wird, durch den eine zusätzliche Kraft auf den Blockierhebel 2 ausgeübt wird, ohne dass dazu die beteiligten Teile größer dimensioniert werden müssen oder die Blockiereinrichtung 100 als solches größer wird. Vielmehr werden bisher ungenutzte Abschnitte der Grundplatte 15 und des Blockierhebels 2 bzw. der Stahlplatte 5 zur Erzeugung der Rückzugskraft genutzt. Dabei sind der zweite hochstehende Schenkel 19 und der zweite Eisenkern 17 von besonderer Bedeutung, da durch diese ein zweites Joch zusätzlich zu dem durch den ersten hochstehenden Schenkel 16 und den ersten Eisenkern 12 gebildeten Joch geschaffen wird. Die Stahlplatte 5 bildet in diesem Fall einen Schwenkanker aus, durch den sowohl der erste Magnetkreis I als auch der zweite Magnetkreis II bei einer Bestromung des Elektromagneten 3 durch Heranziehen des Blockierhebels 2 geschlossen werden.

Ferner sind an dem Konturteil 24 zwei Dämpfungselemente 13 in Form von formidentischen elastischen Haken angeformt, welche parallel zueinander angeordnet sind und über den Rand der Stahlplatte 5 hinausstehen. Die Dämpfungselemente 13 sind dabei so geformt, dass der Blockierhebel 2 ausschließlich über die Dämpfungselemente 13 mit dem Gehäuse 1 bzw. mit dem zweiten hochstehenden Schenkel 19 in Kontakt gelangt.

Der Blockierhebel 2 ist durch eine verschwenkbare Platte in Form der Stahlplatte 5 mit dem daran gehaltenen Konturteil 24 gebildet. Die Haken sind Teil des Konturteils 24 und sind identisch geformt und parallel zueinander angeordnet. Ferner sind an dem zweiten Schenkel 19 des Gehäuses 1 Ausnehmungen 25 vorgesehen, in welche die Haken in der von dem Elektromagneten 3 angezogenen Stellung des Blockierhebels 2 eintauchen. Durch die Ausnehmungen 25 werden entsprechende Freiräume geschaffen, in die die Haken eintauchen können, ohne die Bewegung des Blockierhebels 2 zu behindern.

Ferner weist das Konturteil 25 an der Stahlplatte 5 eine gekröpfte, elastische Blockierspitze 27 auf, welche durch die Kröpfung so geformt ist, dass ein Zwischenraum 26 zwischen der Blockierspitze 27 und der Stahlplatte 5 vorhanden ist. Dieser Zwischenraum 26 und die elastischen Eigenschaften der Blockierspitze 27 ermöglichen ein Einfedern der Blockierspitze 27 zu der Stahlplatte 5 und damit eine gedämpfte Auslösung der Blockierbewegung. Ferner kann die Blockierspitze 27 im Falle einer Zahn-auf-Zahn-Stellung mit der Verzahnung der Steuerscheibe 21 geringe Ausweichbewegungen ausführen, wodurch eine Scheinblockierung verhindert werden kann.

Sowohl die neue Dämpfung und Formgebung des Blockierhebels 2 als auch die neue Ausbildung des Elektromagneten 3 stellen für sich eigenständige Erfindungen dar, welche die Blockiereinrichtung 100 unabhängig voneinander weiterentwickeln.

## Patentansprüche

1. Gurtaufroller mit einer elektrisch betätigbaren Blockiereinrichtung (100) mit
- einem Gehäuse (1) mit einer Grundplatte (15) und einem hochstehenden ersten Schenkel (16),
- einem schwenkbar an dem hochstehenden ersten Schenkel (16) gelagerten Blockierhebel (2) mit einer Stahlplatte (5), welcher über eine Feder (4) federbelastet ist, und
- einem in dem Gehäuse (1) angeordneten Elektromagneten (3) mit
- einer Spule (10) mit einer Durchgangsöffnung (14)
- einem in der Durchgangsöffnung (14) angeordneten ersten Eisenkern (12), welcher bei einem Anlegen einer Spannung an die Spule (10) eine Magnetkraft über die Stahlplatte (5) auf den Blockierhebel (2) ausübt und diesen zur Auslösung einer Blockier- oder Deblockierbewegung entgegen der Kraft der Feder (4) betätigt, wobei
- die Bewegung des Blockierhebels (2) durch einen ersten Magnetkreis (I) erzwungen wird, welcher durch den ersten Eisenkern (12), den hochstehenden ersten Schenkel (16) und die Abschnitte der Grundplatte (15) und des Blockierhebels (2) zwischen dem ersten Eisenkern (12) und dem hochstehenden ersten Schenkel (16) gebildet ist, wobei
- ein Dämpfungselement (13) vorgesehen ist, welches derart angeordnet ist, dass es die Bewegung des Blockierhebels (2) zu dem Gehäuse (1) in wenigstens einem Abschnitt der Bewegungskurve des Blockierhebels (2) dämpft,
**dadurch gekennzeichnet, dass**
- das Dämpfungselement (13) durch wenigstens einen an dem Blockierhebel (2) angeordneten, elastisch verformbaren Haken gebildet ist.

2. Gurtaufroller nach Anspruch 1, **dadurch gekennzeichnet, dass**
- der Haken durch einen an den Blockierhebel (2) angespritzten Kunststoffhaken gebildet ist.

3. Gurtaufroller nach einem der vorangegangenen Ansprüche, **dadurch gekennzeichnet, dass**
- an dem Gehäuse (1) wenigstens eine Ausnehmung (25) vorgesehen ist, in welche der Haken in wenigstens einer Stellung während seiner Bewegung eintaucht.

4. Gurtaufroller nach einem der Ansprüche 1 bis 3, **dadurch gekennzeichnet, dass**
- wenigstens zwei Haken identischer Formgebung vorgesehen sind, welche parallel zueinander ausgerichtet sind.

5. Gurtaufroller nach einem der vorangegangenen Ansprüche, **dadurch gekennzeichnet, dass**
- der Blockierhebel (2) durch eine verschwenkbare Platte gebildet ist, an welcher eine elastische, vorstehende, gekröpfte Blockierspitze (27) vorgesehen ist.

6. Gurtaufroller nach einem der vorangegangenen Ansprüche, **dadurch gekennzeichnet, dass**
- an der dem ersten Schenkel (16) gegenüberliegenden Randseite der Grundplatte (15) ein zweiter hochstehender Schenkel (19) vorgesehen ist, und
- in der Durchgangsöffnung (14) ein zweiter Eisenkern (17) angeordnet ist, und
- die Bewegung des Blockierhebels (2) bei einer Aktivierung des Elektromagneten (3) zusätzlich durch einen zweiten Magnetkreis (II), gebildet durch den zweiten Eisenkern (17), den zweiten hochstehenden Schenkel (19) und die Abschnitte des Blockierhebels (2) und der Grundplatte (15) zwischen dem zweiten Schenkel (19) und dem zweiten Eisenkern (17), erzwungen wird.

7. Gurtaufroller nach Anspruch 6, **dadurch gekennzeichnet, dass**
- der erste und der zweite Eisenkern (12,17) in der Grundplatte (15) des Gehäuses (1) verstemmt sind.

8. Gurtaufroller nach einem der Ansprüche 6 oder 7, **dadurch gekennzeichnet, dass** der erste und/oder zweite hochstehende Schenkel (16,19) einstückig mit der Grundplatte (15) ausgebildet ist.

9. Gurtaufroller nach einem der Ansprüche 6 bis 8, **dadurch gekennzeichnet, dass**
- die Grundplatte (15) einen Endabschnitt (22) aufweist, welcher auf der Seite des ersten Schenkels (16) angeordnet ist, die von dem zweiten Schenkel (19) abgewandt ist, und
- die Feder (4) mit einem Ende mit dem Endabschnitt (22) der Grundplatte (15) und mit dem anderen Ende mit einem über den ersten Schenkel (16) hinausstehenden Ende (23) des Blockierhebels (2) verbunden ist.

10. Gurtaufroller nach einem der Ansprüche 6 bis 9, **dadurch gekennzeichnet, dass**
- der Blockierhebel (2) um eine in dem ersten Schenkel (16) angeordnete Drehachse schwenkbar gelagert ist.

11. Gurtaufroller nach einem der Ansprüche 6 bis 10, **dadurch gekennzeichnet, dass**
- die Spule (10) elektrische Kontaktstellen (18) aufweist, welche an den Spulenkörper angespritzt sind.

## Claims

1. Belt retractor comprising an electrically actuatable blocking device (100) comprising
- a housing (1) having a base plate (15) and an upright first limb (16),
- a blocking lever (2) which is pivotably mounted on the upright first limb (16) and has a steel plate (5) which is spring-loaded by means of a spring (4), and
- an electromagnet (3) which is arranged in the housing (1), comprising
- a coil (10) having a through-opening (14)
- a first iron core (12) which is arranged in the through-opening (14) and exerts a magnetic force on the blocking lever (2) via the steel plate (5) when a voltage is applied to the coil (10), and actuates said lever to trigger a blocking or unblocking movement against the force of the spring (4), wherein
- the movement of the blocking lever (2) is forced by a first magnetic circuit (I) which is formed by the first iron core (12), the upright first limb (16) and the portions of the base plate (15) and of the blocking lever (2) between the first iron core (12) and the upright first limb (16), wherein
- a damping element (13) is provided which is arranged such that it damps the movement of the blocking lever (2) relative to the housing (1) in at least a portion of the movement curve of the blocking lever (2), **characterized in that**
- the damping element (13) is formed by at least one elastically deformable hook arranged on the blocking lever (2).

2. Belt retractor according to claim 1, **characterized in that**
- the hook is formed by a plastic hook molded onto the blocking lever (2).

3. Belt retractor according to any of the preceding claims, **characterized in that**
- at least one recess (25) is provided in the housing (1), into which the hook dips during its movement in at least one position.

4. Belt retractor according to any of claims 1 to 3, **characterized in that**
- at least two hooks of identical shape are provided, which are aligned in parallel with one another.

5. Belt retractor according to any of the preceding claims, **characterized in that**
- the blocking lever (2) is formed by a pivotable plate on which an elastic, projecting, cranked blocking tip (27) is provided.

6. Belt retractor according to any of the preceding claims, **characterized in that**
- a second upright limb (19) is provided on the edge side of the base plate (15) opposite the first limb (16), and
- a second iron core (17) is arranged in the through-opening (14), and
- the movement of the blocking lever (2), when the electromagnet (3) is activated, is additionally forced by a second magnetic circuit (II) formed by the second iron core (17), the second upright limb (19) and the portions of the blocking lever (2) and of the base plate (15) between the second limb (19) and the second iron core (17).

7. Belt retractor according to claim 6, **characterized in that**
- the first and the second iron core (12, 17) are press-fitted in the base plate (15) of the housing (1).

8. Belt retractor according to any of claims 6 or 7, **characterized in that** the first and/or second upright limb (16, 19) is integral with the base plate (15).

9. Belt retractor according to any of claims 6 to 8, **characterized in that**
- the base plate (15) has an end portion (22) which is arranged on the side of the first limb (16) facing away from the second limb (19), and
- the spring (4) is connected at one end to the end portion (22) of the base plate (15) and at the other end to an end (23) of the blocking lever (2) protruding beyond the first limb (16).

10. Belt retractor according to any of claims 6 to 9, **characterized in that**
- the blocking lever (2) is pivotably mounted about an axis of rotation arranged in the first limb (16).

11. Belt retractor according to any of claims 6 to 10, **characterized in that**
- the coil (10) has electrical contact points (18) which are molded onto the coil body.

## Revendications

1. Rétracteur de ceinture comportant un dispositif de blocage (100) actionnable électriquement comportant
- un boîtier (1) comportant une plaque de base (15) et une première branche (16) droite,
- un levier de blocage (2) monté pivotant sur la première branche (16) droite, comportant une plaque en acier (5), laquelle est contrainte par ressort par l'intermédiaire d'un ressort (4), et
- un électro-aimant (3) disposé dans le boîtier (1), comportant
- une bobine (10) comportant une ouverture de passage (14)
- un premier noyau de fer (12) disposé dans l'ouverture de passage (14), lequel exerce, lors de l'application d'une tension à la bobine (10), une force magnétique par l'intermédiaire de la plaque en acier (5) sur le levier de blocage (2) et actionne celui-ci pour déclencher un déplacement de blocage ou de déblocage contre la force du ressort (4),
- le déplacement du levier de blocage (2) étant forcé au moyen d'un premier circuit magnétique (I), lequel est formé par le premier noyau de fer (12), la première branche (16) droite et les sections de la plaque de base (15) et du levier de blocage (2) situées entre le premier noyau de fer (12) et la première branche (16) droite,
- un élément d'amortissement (13) étant prévu, lequel est disposé de telle façon qu'il amortit le déplacement du levier de blocage (2) vers le boîtier (1) dans au moins une section de la courbe de déplacement du levier de blocage (2),
**caractérisé en ce que**
- l'élément d'amortissement (13) est formé par au moins un crochet élastiquement déformable disposé sur le levier de blocage (2).

2. Rétracteur de ceinture selon la revendication 1, **caractérisé en ce que**
- le crochet est formé par un crochet en matière plastique moulé par injection sur le levier de blocage (2).

3. Rétracteur de ceinture selon l'une des revendications précédentes, **caractérisé en ce que**
- au moins un évidement (25) est prévu sur le boîtier (1), dans lequel le crochet plonge dans au moins une position durant son déplacement.

4. Rétracteur de ceinture selon l'une des revendications 1 à 3, **caractérisé en ce que**
- au moins deux crochets de conception identique sont prévus, lesquels sont orientés parallèles entre eux.

5. Rétracteur de ceinture selon l'une des revendications précédentes, **caractérisé en ce que**
- le levier de blocage (2) est formé par une plaque pouvant pivoter, sur laquelle est prévue une pointe de blocage (27) coudée, élastique et en saillie.

6. Rétracteur de ceinture selon l'une des revendications précédentes, **caractérisé en ce que**
- une seconde branche (19) droite est prévue sur le côté de bord de la plaque de base (15) opposé à la première branche (16), et
- un second noyau de fer (17) est disposé dans l'ouverture de passage (14), et
- le déplacement du levier de blocage (2), lors d'une activation de l'électro-aimant (3), est forcé en plus par un second circuit magnétique (II) formé par le second noyau de fer (17), la seconde branche (19) droite et les sections du levier de blocage (2) et de la plaque de base (15) situées entre la seconde branche (19) et le second noyau de fer (17).

7. Rétracteur de ceinture selon la revendication 6, **caractérisé en ce que**
- les premier et second noyaux de fer (12, 17) sont matés dans la plaque de base (15) du boîtier (1).

8. Rétracteur de ceinture selon l'une des revendications 6 ou 7, **caractérisé en ce que** la première et/ou la seconde branche (16, 19) droite sont formées d'une seule pièce avec la plaque de base (15).

9. Rétracteur de ceinture selon l'une des revendications 6 à 8, **caractérisé en ce que**
- la plaque de base (15) présente une section d'extrémité (22), laquelle est disposée sur le côté de la première branche (16), lequel est opposé à la seconde branche (19), et
- le ressort (4) est relié par une extrémité à la section d'extrémité (22) de la plaque de base (15) et par l'autre extrémité à une extrémité (23) du levier de blocage (2) faisant saillie au-delà de la première branche (16).

10. Rétracteur de ceinture selon l'une des revendications 6 à 9, **caractérisé en ce que**
- le levier de bocage (2) est monté pivotant autour d'un axe de rotation disposé dans la première branche (16).

11. Rétracteur de ceinture selon l'une des revendications 6 à 10, **caractérisé en ce que**
- la bobine (10) présente des points de contact électriques (18), lesquels sont moulés par injection sur le corps de bobine.
